# EUROPÄISCHE PATENTSCHRIFT

(11) **EP 4 037 941 B1**
(45) Veröffentlichungstag und Bekanntmachung des Hinweises auf die Patenterteilung: **11.10.2023**
(21) Anmeldenummer: 20757846.9
(22) Anmeldetag: 11.08.2020
(51) Int. Cl.: B60T 7/22, B60W 30/09, B60W 30/16, B60T 8/17

(54) **VERFAHREN UND VORRICHTUNG ZUR DURCHFÜHRUNG EINER ABSTANDS- ODER GESCHWINDIGKEITSREGELUNGSFUNKTION FÜR EIN EINSPURIGES KRAFTFAHRZEUG**
METHOD AND DEVICE FOR CARRYING OUT A DISTANCE OR SPEED-REGULATING FUNCTION FOR A SINGLE-TRACK MOTOR VEHICLE
PROCÉDÉ ET DISPOSITIF PERMETTANT L'EXÉCUTION D'UNE FONCTION DE RÉGULATION DE DISTANCE OU DE VITESSE POUR UN VÉHICULE À MOTEUR MONOVOIE

(30) Priorität: 01.10.2019 DE 102019215101
(43) Veröffentlichungstag der Anmeldung: 10.08.2022
(73) Patentinhaber: Robert Bosch GmbH, 70442 Stuttgart (DE)
(72) Erfinder: SCHOENHERR, Michael, 71272 Renningen-Malmsheim (DE); GRELAUD, Mathieu, 71638 Ludwigsburg (DE)
(86) Internationale Anmeldenummer: PCT/EP2020/072508
(87) Internationale Veröffentlichungsnummer: WO 2021/063576

(56) Entgegenhaltungen:
- WO-A1-2018/061095
- DE-A1-102013 226 004

## Beschreibung

### Stand der Technik

Die DE 10 2015 217 256 A1 lehrt ein Verfahren zur Durchführung eines Notbremsvorgangs bei einem einspurigen Kraftfahrzeug, bei dem
- mittels einer das Umfeld vor dem Kraftfahrzeug erfassenden Umfeldsensorik eine die Wahrscheinlichkeit eines Unfalls des Kraftfahrzeugs beschreibende Unfallwahrscheinlichkeitsgröße ermittelt wird,
- für den Fall, dass anhand einer Auswertung der Unfallwahrscheinlichkeitsgröße festgestellt wird, dass die Unfallwahrscheinlichkeit einen vorgegebenen Schwellenwert überschreitet, ein fahrerunabhängiger Notbremsvorgang des Kraftfahrzeugs eingeleitet wird.

Zudem ist aus der DE 10 2013 226 004 A1 ein Verfahren zur Durchführung einer Abstands- oder Geschwindigkeitsregelungsfunktion für ein Kraftfahrzeug bekannt, bei dem die aktivierte Abstands- oder Geschwindigkeitsregelungsfunktion vom Fahrer durch Betätigung eines Bremsbedienelements deaktivierbar ist, wenn die Betätigungsintensität des Bremsbedienelements einen ersten Schwellenwert überschreitet, und wobei durch Betätigung des Bremsbedienelements mit einer einen zweiten Schwellenwert überschreitenden Betätigungsintensität eine Notbremsassistenzfunktion aktiviert wird.

### Offenbarung der Erfindung

Die Erfindung betrifft ein Verfahren zur Durchführung einer Abstands- oder Geschwindigkeitsregelungsfunktion bzw. ACC-Funktion für ein einspuriges Kraftfahrzeug, bei dem
- die aktivierte Abstands- oder Geschwindigkeitsregelungsfunktion vom Fahrer durch Betätigung eines Bremsbedienelements deaktivierbar ist, wenn die Betätigungsintensität des Bremsbedienelements einen ersten Schwellenwert überschreitet,
- mittels einer am einspurigen Kraftfahrzeug angebrachten Umfeldsensorik das Vorliegen einer Kollisionsgefahr für das einspurige Kraftfahrzeug ermittelt wird,
- bei Vorliegen einer Kollisionsgefahr durch Betätigung des Bremsbedienelements durch den Fahrer mit einer einen zweiten Schwellenwert überschreitenden Betätigungsintensität eine Notbremsassistenzfunktion aktiviert wird, welche die der Betätigungsintensität entsprechende Bremsintensität fahrerunabhängig verstärkt,
- wobei der zweite Schwellenwert niedriger als der erste Schwellenwert ist,
- wobei nach Beendigung der Notbremsassistenzfunktion die aktivierte Abstands- oder Geschwindigkeitsregelungsfunktion fahrerunabhängig mit den vor Aktivierung der Notbremsassistenzfunktion vorhandenen Einstellungen weitergeführt wird.

Dies erlaubt eine Einbettung einer Notbremsassistenzfunktion in eine Abstands- oder Geschwindigkeitsregelungsfunktion. Bei einem kurzfristig notwendigen starken Bremsvorgang, dessen Stärke nicht im Rahmen der Abstands- oder Geschwindigkeitsregelungsfunktion darstellbar ist, kann dieser durch den Fahrer unter Benutzung eines Notbremsassistenten durchgeführt werden, ohne dass eine Deaktivierung der Abstands- oder Geschwindigkeitsregelungsfunktion erfolgt.

Eine vorteilhafte Ausgestaltung der Erfindung ist dadurch gekennzeichnet, dass nur bei Vorliegen einer Kollisionsgefahr durch Betätigung des Bremsbedienelements durch den Fahrer mit einer einen zweiten Schwellenwert überschreitenden Betätigungsintensität die Notbremsassistenzfunktion aktiviert wird, wenn der zweite Schwellenwert niedriger als der erste Schwellenwert ist. Dadurch wird sichergestellt, dass die Notbremsassistentenfunktion nur bei Vorliegen einer Kollisionsgefahr ohne Deaktivierung der Abstands- oder Geschwindigkeitsregelungsfunktion durchgeführt werden kann.

Eine vorteilhafte Ausgestaltung der Erfindung ist dadurch gekennzeichnet, dass es sich bei dem Bremsbedienelement um ein Bremspedal, einen Bremshebel oder einen Bremsdrehgriff handelt.

Eine vorteilhafte Ausgestaltung der Erfindung ist dadurch gekennzeichnet, dass es sich bei dem einspurigen Kraftfahrzeug um ein Motorrad handelt.

Eine vorteilhafte Ausgestaltung der Erfindung ist dadurch gekennzeichnet, dass es sich bei der Umfeldsensorik um eine Radarsensorik, eine Videosensorik, eine Lidarsensorik oder eine Ultraschallsensorik handelt. Derartige Sensoriken sind aus dem PKW-Bereich bereits bekannt.

Eine vorteilhafte Ausgestaltung der Erfindung ist dadurch gekennzeichnet, dass es sich bei der Bremsintensität um die Bremskraft, das Bremsmoment oder den Bremsdruck handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

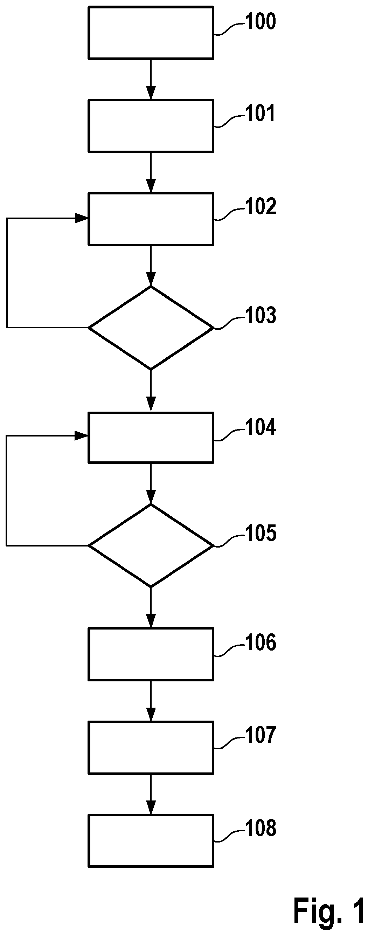

Die Zeichnung umfasst Figur 1.

In Fig. 1 ist der Ablauf einer Ausgestaltung des erfindungsgemäßen Verfahrens dargestellt.

ACC-Funktionen können durch Betätigung des Bremsbedienelements durch den Fahrer deaktiviert werden. Weiter ist es sinnvoll, die fahrerunabhängigen Bremsverzögerungen bei einem ACC-System auf einen Maximalwert zu begrenzen, um den Fahrer nicht durch einen unerwartet starken Bremseingriff zu überfordern.

Eine mögliche Notbremsassistenzfunktion für Zweiräder basiert darauf, dass diese aus Sicherheitsgründen nur aktiviert wird, wenn die vom Fahrer angeforderte Bremskraft nicht zur Vermeidung einer Kollision ausreicht. Die Notbremsassistenzfunktion wird nicht fahrerunabhängig ausgelöst, sondern nur wenn der Fahrer mittels eines Bremsbedienelements eine Bremsung einleitet. Dann verstärkt die Notbremsassistenzfunktion die vom Fahrer angeforderte Bremskraft. Sobald der Fahrer das Bremsbedienelement nicht mehr betätigt, wird die Notbremsassistenzfunktion beendet. Dadurch wird sichergestellt, dass der Fahrer des Zweirads so viel Kontrolle wie möglich über das Zweirad behält.

Eine Kombination der ACC-Funktion und der Notbremsassistenzfunktion wird ermöglicht, wenn die Bremsbedienelementschwellenwerte für die Auslösung der Notbremsassistenzfunktion und die Beendigung der ACC-Funktion unterschiedlich gewählt werden. Dabei ist der Auslöseschwellenwert für die Notbremsassistenzfunktion geringer als derjenige für die Deaktivierung der ACC-Funktion. Die Notbremsassistenzfunktion verstärkt für den Fall einer Kollisionsgefahr die vom Fahrer vorgegebene Bremsintensitätsvorgabe, solange der Fahrer das Bremspedal betätigt. Nach Beendigung der Notbremsassistenzfunktion wird die Abstands- oder Geschwindigkeitsregelungsfunktion bzw. ACC-Funktion weitergeführt.

In Fig. 1 ist der Ablauf einer Ausgestaltung des erfindungsgemäßen Verfahrens dargestellt. Nach dem Start des Verfahrens in Block 100 wird in Block 101 die Abstands- oder Geschwindigkeitsregelungsfunktion bzw. ACC-Funktion aktiviert und in Block 102 wird mittels einer am einspurigen Kraftfahrzeug angebrachten Umfeldsensorik das vor dem einspurigen Kraftfahrzeug liegende Umfeld erfasst und analysiert. In Block 103 wird anhand der Ausgangssignale der Umfeldsensorik ermittelt, ob eine Kollisionsgefahr für das einspurige Kraftfahrzeug vorliegt. Ist dies nicht der Fall, dann wird zu Block 102 zurückgekehrt. Liegt jedoch eine Kollisionsgefahr vor, dann wird in Block 104 das Vorliegen einer Betätigung eines Bremsbedienelements durch den Fahrer ermittelt. In Block 105 wird überprüft, ob die Betätigungsstärke des Bremsbedienelements durch den Fahrer einen vorgegebenen Schwellenwert überschreitet. Ist dies nicht der Fall, dann wird zu Block 104 zurückgekehrt. Überschreitet die Betätigungsstärke jedoch den Schwellenwert, dann wird in Block 106 die Notbremsassistenzfunktion aktiviert. Diese Funktion wirkt, solange der Fahrer das Bremsbedienelement betätigt. Nach Beendigung der Notbremsassistenzfunktion wird in Block 107 die ACC-Funktion wiederaufgenommen und in Block 108 endet das Verfahren.

## Patentansprüche

1. Verfahren zur Durchführung einer Abstands- oder Geschwindigkeitsregelungsfunktion für ein einspuriges Kraftfahrzeug, bei dem
- die aktivierte Abstands- oder Geschwindigkeitsregelungsfunktion vom Fahrer durch Betätigung eines Bremsbedienelements deaktivierbar ist, wenn die Betätigungsintensität des Bremsbedienelements einen ersten Schwellenwert überschreitet (101),
- mittels einer am einspurigen Kraftfahrzeug angebrachten Umfeldsensorik das Vorliegen einer Kollisionsgefahr für das einspurige Kraftfahrzeug ermittelt wird (103),
- bei Vorliegen einer Kollisionsgefahr durch Betätigung des Bremsbedienelements durch den Fahrer mit einer einen zweiten Schwellenwert überschreitenden Betätigungsintensität (105) eine Notbremsassistenzfunktion aktiviert wird (106), welche die der Betätigungsintensität entsprechende Bremsintensität fahrerunabhängig verstärkt,
- wobei der zweite Schwellenwert niedriger als der erste Schwellenwert ist,
- wobei nach Beendigung der Notbremsassistenzfunktion die aktivierte Abstands- oder Geschwindigkeitsregelungsfunktion fahrerunabhängig mit den vor Aktivierung der Notbremsassistenzfunktion vorhandenen Einstellungen weitergeführt wird (107).

2. Verfahren nach Anspruch 1, **dadurch gekennzeichnet, dass** nur bei Vorliegen einer Kollisionsgefahr durch Betätigung des Bremsbedienelements durch den Fahrer mit einer einen zweiten Schwellenwert überschreitenden Betätigungsintensität die Notbremsassistenzfunktion aktiviert wird, wenn der zweite Schwellenwert niedriger als der erste Schwellenwert ist.

3. Verfahren nach Anspruch 1, **dadurch gekennzeichnet, dass** es sich bei dem Bremsbedienelement um ein Bremspedal, einen Bremshebel oder einen Bremsdrehgriff handelt.

4. Verfahren nach Anspruch 1, **dadurch gekennzeichnet, dass** es sich bei dem einspurigen Kraftfahrzeug um ein Motorrad handelt.

5. Verfahren nach Anspruch 1, **dadurch gekennzeichnet, dass** es sich bei der Umfeldsensorik um eine Radarsensorik, eine Videosensorik, eine Lidarsensorik oder eine Ultraschallsensorik handelt.

6. Verfahren nach Anspruch 1, **dadurch gekennzeichnet, dass** es sich bei der Bremsintensität um die Bremskraft, das Bremsmoment oder den Bremsdruck handelt.

7. Vorrichtung, enthaltend ein Bremsbedienelement, eine Umfeldsensorik und Mittel, die zur Durchführung des Verfahrens nach einem der Ansprüche 1 bis 6 ausgestaltet sind.

## Claims

1. Method for performing a distance or speed control function for a single-track motor vehicle, in which
- the activated distance or speed control function can be deactivated by the driver by actuating a brake operating element if the actuation intensity of the brake operating element exceeds (101) a first threshold value,
- the presence of a collision risk for the single-track motor vehicle is determined (103) using an environmental sensor system fitted to the single-track motor vehicle,
- if there is a collision risk, an emergency brake assist function is activated (106) by the driver actuating the brake operating element with an actuation intensity (105) that exceeds a second threshold value, which emergency brake assist function intensifies the braking intensity corresponding to the actuation intensity in a manner independent of the driver,
- wherein the second threshold value is lower than the first threshold value,
- wherein, after terminating the emergency brake assist function, the activated distance or speed control function is continued (107) in a manner independent of the driver with the settings present before activation of the emergency brake assist function.

2. Method according to Claim 1, **characterized in that** the emergency brake assist function is activated only when there is a collision risk by the driver actuating the brake operating element with an actuation intensity that exceeds a second threshold value when the second threshold value is lower than the first threshold value.

3. Method according to Claim 1, **characterized in that** the brake operating element is a brake pedal, a brake lever or a brake turning handle.

4. Method according to Claim 1, **characterized in that** the single-track motor vehicle is a motorcycle.

5. Method according to Claim 1, **characterized in that** the environmental sensor system is a radar sensor system, a video sensor system, a lidar sensor system or an ultrasonic sensor system.

6. Method according to Claim 1, **characterized in that** the braking intensity is the braking force, the braking torque or the braking pressure.

7. Apparatus containing a brake operating element, an environmental sensor system and means which are configured to carry out the method according to one of Claims 1 to 6.

## Revendications

1. Procédé de réalisation d'une fonction de régulation de la distance ou de la vitesse pour un véhicule motorisé à voie unique, avec lequel
- la fonction de régulation de la distance ou de la vitesse activée peut être désactivée par le conducteur en actionnant un élément de commande de frein lorsque l'intensité d'actionnement de l'élément de commande de frein dépasse une première valeur de seuil (101),
- la présence d'un risque de collision pour le véhicule motorisé à voie unique est déterminée au moyen d'un système de détection d'environnement monté sur le véhicule motorisé à voie unique (103),
- en présence d'un risque de collision, une fonction d'assistance de freinage de secours, qui amplifie indépendamment du conducteur l'intensité de freinage correspondant à l'intensité d'actionnement, est activée (106) par l'actionnement de l'élément de commande de frein par le conducteur avec une intensité d'actionnement qui dépasse une deuxième valeur de seuil (105),
- la deuxième valeur de seuil étant inférieure à la première valeur de seuil,
- après l'achèvement de la fonction d'assistance de freinage de secours, la fonction de régulation de la distance ou de la vitesse activée est poursuivie indépendamment du conducteur avec les réglages présents avant l'activation de la fonction d'assistance de freinage de secours (107).

2. Procédé selon la revendication 1, **caractérisé en ce que** la fonction d'assistance de freinage de secours n'est activée qu'en présence d'un risque de collision par actionnement de l'élément de commande de frein par le conducteur avec une intensité d'actionnement qui dépasse une deuxième valeur de seuil, lorsque la deuxième valeur de seuil est inférieure à la première valeur de seuil.

3. Procédé selon la revendication 1, **caractérisé en ce que** l'élément de commande de frein est une pédale de frein, un levier de frein ou une poignée rotative de frein.

4. Procédé selon la revendication 1, **caractérisé en ce que** le véhicule motorisé à voie unique est une motocyclette.

5. Procédé selon la revendication 1, **caractérisé en ce que** le système de détection d'environnement est un système de détection à radar, un système de détection vidéo, un système de détection à lidar ou un système de détection à ultrasons.

6. Procédé selon la revendication 1, **caractérisé en ce que** l'intensité de freinage est la force de freinage, le moment de freinage ou la pression de freinage.

7. Dispositif, comprenant un élément de commande de frein, un système de détection d'environnement et des moyens qui sont configurés pour mettre en œuvre le procédé selon l'une des revendications 1 à 6.
